# EUROPEAN PATENT APPLICATION

(11) **EP 4 559 945 A1**
(43) Date of publication of application: **28.05.2025**
(21) Application number: 23211433.0
(22) Date of filing: 22.11.2023
(51) Int. Cl.: C08G 18/00, C04B 18/06, C04B 26/10, C04B 26/16, C08G 18/32, C08G 18/38, C08G 18/78, C08G 18/79, C08K 3/34, C08L 75/02, C09J 175/02

(54) **SUPERABSORBERS FOR MULTI-COMPONENT CHEMICAL FASTENING SYSTEMS BASED ON ISOCYANATE-AMINE ADDUCTS**

(71) Applicant: Hilti Aktiengesellschaft, 9494 Schaan (LI)
(72) Inventor: Kumru, Memet-Emin, 86199 Augsburg (DE); Plenk, Christian, 86916 Kaufering (DE); Pschenitza, Markus, 87600 Kaufbeuren (DE)
(74) Representative: Hilti Aktiengesellschaft Corporate Intellectual Property

(57) **Abstract**

A multi-component resin system comprising at least one isocyanate component and at least one amine component, wherein the isocyanate component comprises at least one aliphatic and/or aromatic polyisocyanate having an average NCO functionality of 2 or higher, wherein the amine component comprises at least one amine reactive to isocyanate groups having an average NH functionality of 2 or higher, characterized in that the isocyanate component and/or the amine component comprises at least one superabsorber.

## Description

The present invention relates to a multi-component resin system comprising at least one isocyanate component and at least one amine component, wherein the isocyanate component comprises at least one aliphatic and/or aromatic polyisocyanate having an average NCO functionality of 2 or higher, wherein the amine component comprises at least one amine reactive to isocyanate groups having an average NH functionality of 2 or higher, wherein the isocyanate component and/or the amine component comprises at least one superabsorber. The present invention further relates to the use of the multi-component resin system material for fixing anchoring elements in a hole or crevice in a building substrate, as well as to a method of fixing an anchoring element in a hole or crevice in a building substrate, comprising introducing the multi-component resin system material and an anchoring element into the hole or crevice, and allowing the multi-component resin system material to cure.

### Background

In the construction industry, aggregates in the form of particulate fillers are known for use in polymer-forming chemical anchoring mortars (sometimes also referred to as *"chemical dowels*") with one or more components, for example in the form of two-chamber cartridges or two-chamber capsules, for fixing anchoring elements in boreholes. Often, not much importance is attached to the nature of the fillers, unless they are those which, like cement, themselves contribute to the consolidation, for example by hydraulic setti ng.

It is known that water affects the performance of chemical anchoring mortars, as for example described in Cook, R. A., Konz, R. C., "Factors Influencing Bond Strength of Adhesive Anchors", ACI Structural Journal, 2001, 98, 76- 86. It is known that the presence of water or even moisture during the installation of a chemical anchor can influence the performance of an adhesive anchor system either mechanically, chemically or even both. Jobsite conditions where the concrete substrate is wet, are common and sometimes unexpected.

Usually, binder systems based on radically curing compounds such as methacrylate resins or based on epoxy resins reacted with amine curing agents are used for the production of mortars for the chemical fastening of structural elements, such as anchor rods, reinforcing bars and screws in boreholes. There are countless commercially available products based on these binder systems.

However, the known binder systems show inadequate properties especially under critical external conditions, such as elevated temperatures, uncleaned boreholes, moist or water-filled boreholes, diamond-drilled boreholes, boreholes in cracked concrete, etc.

In addition to the further development and improvement of existing binder systems, efforts are therefore also being made to investigate binder systems other than those mentioned above with regard to their suitability as a basis for mortar compounds for chemical fixing. For example, EP 3 447 078 A1 describes a chemical anchor made from a multicomponent compound comprising a polyisocyanate component and a polyaspartic ester component. When the two components are mixed, polyurea is formed in a polyaddition reaction, which forms the binder of the mortar mass.

A disadvantage of these mortar compounds is that the polyaspartic acid esters used lead to insufficient crosslinking and already soften strongly at temperatures of 80 °C and accordingly show little performance at high temperatures. In addition, the cured specimens are not base-stable.

To circumvent these drawbacks, a multicomponent resin system was developed which, starting from EP 3 447 078 A1, uses an amine with an average NH functionality of 2 or greater instead of the polyaspartic ester, as described in EP 3 882 292 A1.

However, there is still the need for improvement of bond strength of chemical dowels based on isocyanate amine-based mortars in particular under wet conditions.

### Summary of the invention

In view of this, there is a need in the art for isocyanate amine-based mortars with a lower sensitivity to the presence of water, i.e., that do not weaken so strongly in damp-holes or even water-filled boreholes. That is to say, it is an object of the present invention to provide isocyanate amine-based mortars showing a minimum difference in bond strength between dry and wet conditions.

The above object underlying the present invention is solved by a multi-component resin system comprising at least one isocyanate component and at least one amine component,
wherein the isocyanate component comprises at least one aliphatic and/or aromatic polyisocyanate having an average NCO functionality of 2 or higher,
wherein the amine component comprises at least one amine reactive to isocyanate groups having an average NH functionality of 2 or higher,
characterized in that
the isocyanate component and/or the amine component comprises at least one superabsorber.

The present invention also relates to the use of a multi-component resin system according to the present invention for chemically fixing anchoring means in drilled holes or for structural bonding. Furthermore, the present invention relates to use of a superabsorber in a multi-component resin system according to the present invention to increase the bond stress of an anchoring means chemically fixed by said multi-component resin system in a drilled hole.

In another embodiment, the present invention relates to a method of fixing an anchoring element in a hole or crevice in a building substrate, comprising introducing the multi-component resin system according to the present invention and an anchoring element into the hole or crevice, and allowing the multi-component resin system to cure.

It has been surprisingly found by the present inventors that the bond strength decreasing effect of water is significantly reduced when parts or all of the conventional filler present in the multi-component resin system material are replaced by a superabsorber according to the present invention. Thus, the multi-component resin system material according to the present invention shows lower moisture sensitivity as regards the bonding strength obtained.

In view of this, there is a need in the art for chemical mortars with a lower sensitivity to the presence of water, i.e., that do not weaken so strongly in damp-holes or even water-filled boreholes. That is to say, it is an object of the present invention to provide isocyanate amine-based mortars showing a minimum difference in bond strength between dry and wet conditions.

Further embodiments of the present invention are described in the following detailed description and the appended claims.

### Detailed Description of the Invention

As outlined above, the present invention provides a a multi-component resin system comprising at least one isocyanate component (A) and at least one amine component (B),
wherein the isocyanate component (A) comprises at least one aliphatic and/or aromatic polyisocyanate having an average NCO functionality of 2 or higher,
wherein the amine component (B) comprises at least one amine reactive to isocyanate groups having an average NH functionality of 2 or higher,
characterized in that
the isocyanate component (A) and/or the amine component (B) comprises at least one superabsorber (C).

In the context of the present invention, the terms used herein and in the following description have the following meanings:
- *"Superabsorber"* as used herein denotes a material being able to absorb at least its own weight of water or aqueous solution, thereby swelling accordingly and forming a hydrogel. Preferably, the material is able to absorb water or an aqueous solution in a quantity of at least 50 times of its own weight, preferably at least 100 times, more preferably at least 500 times, and even more preferably at least 1000 times, and most preferably more than 1000 times.
- *"Isocyanates"* are compounds that have a functional isocyanate group -N=C=O and are characterized by the structural unit R-N=C=O.
- *"Polyisocyanates"* are compounds that have at least two functional isocyanate groups -N=C=; diisocyanates, which are also covered by the definition of polyisocyanate, are characterized, for example, by the structure O=C=N-R-N=C=O and thus have an NCO functionality of 2.
- *"Average NCO functionality*" describes the number of isocyanate groups in the compound; in the case of a mixture of isocyanates, the "averaged NCO functionality' describes the average number of isocyanate groups in the mixture and is calculated according to the formula: averaged NCO functionality (mixture) = I average NCO functionality (isocyanate i) / nᵢ, i.e. the sum of the average NCO functionality of the individual components divided by the number of individual components.
- *"Isocyanate component (A)"* is a component of the multi-component resin system which comprises at least one polyisocyanate and optionally at least one filler and/or at least one rheology additive and/or further additives.
- *"Amines"* are compounds which have a functional NH group, are derived from ammonia by replacing one or two hydrogen atoms with hydrocarbon groups and have the general structures RNH₂ (primary amines) and R₂NH (secondary amines) (see: IUPAC Compendium of Chemical Terminology, 2nd ed. (the "Gold Book"), compiled by A. D. McNaught and A. Wilkinson, Blackwell Scientific Publications, Oxford (1997)). The compound class of polyaspartic acid esters is explicitly excluded from the term amines in the context of the present inventions. These are defined separately under the term polyaspartic acid esters.
- *"NH functionality*" describes the number of active hydrogen atoms that can react with an isocyanate group in an amino group.
- *"Average NH functionality*" describes the number of active hydrogen atoms that can react with an isocyanate group in an amine and results from the number and NH functionality of the amino groups contained in the compound, i.e. the amine; in the case of a mixture of amines, the "averaged NH functionality' describes the average number of active hydrogen atoms in the mixture and is calculated according to the formula: averaged NH functionality (mixture) = I average NH functionality (amine i) / nᵢ, i.e. the sum of the average NH functionality of the individual components divided by the number of individual components.
- The term *"polyaspartic acid esters"* refers to compounds of the general formula: 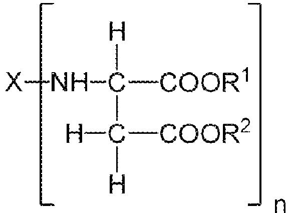 in which
   R¹ and R² can be the same or different and represent an organic group which is inert to isocyanate groups,
   X represents an n-valent organic group which is inert to isocyanate groups, and n represents an integer of at least 2, preferably from 2 to 6, more preferably from 2 to 4 and particularly preferably 2.
- *"Amine component (B)"* is a component of the multi-component resin system which comprises at least one amine and optionally at least one filler and/or at least one rheology additive and/or further additives.
- *"Isocyanate amine adducts"* are polymers that are formed by the polyaddition reaction of isocyanates with amines. The isocyanate amine adducts according to the invention are preferably polyureas which comprise at least one structural element of the form [-NH-R-NH-NH-R'-NH-].
- *"Aliphatic compounds"* are acyclic or cyclic, saturated or unsaturated carbon compounds, excluding aromatic compounds.
- *"Cycloaliphatic compounds"* or *"alicyclic compounds"* are compounds having a carbocyclic ring structure, excluding benzene derivatives or other aromatic systems.
- *"Araliphatic compounds"* are aliphatic compounds having an aromatic backbone such that, in the case of a functionalized araliphatic compound, a functional group that is present is bonded to the aliphatic rather than the aromatic part of the compound.
- *"Aromatic compounds"* are compounds which follow Hückel's rule (4n+2).
- *"Mortar composition"* refers to the composition that is obtained by mixing the isocyanate component and the amine component and as such can be used directly for chemical fastening.
- *"Filler"* refers to an organic or inorganic, in particular inorganic, compound.
- *"Rheology additive"* refers to additives which are able to influence the viscosity behavior of the isocyanate component, the amine component and the multi component resin system during storage, application and/or curing. The rheology additive prevents, inter alia, sedimentation of the fillers in the polyisocyanate component and/or the amine component. It also improves the miscibility of the components and prevents possible phase separation.
- *"Temperature resistance"* refers to the change in the bond stress of a cured mortar composition at an elevated temperature compared with the reference bond stress. In the context of the present invention, the temperature resistance is specified in particular as the ratio of the bond stress at 80°C to the reference stress.
- The terms "a" or "an" as articles preceding a chemical compound class mean that one or more compounds falling under that chemical compound class may be meant. In a preferred embodiment, these articles mean only a single compound, the term *"at least one"* means numerically "one *or more".* In a preferred embodiment, the term numerically means "one", the terms *"include"* and *"comprising"* mean that there may be other components in addition to those mentioned. These terms are meant inclusively and therefore include *"consisting of'. "Consisting of'* is meant conclusively and means that no further constituents may be present. In an embodiment, the terms *"comprise"* or *"comprising"* mean *"consisting of',* a range delimited by numbers, e.g., *"from 80 °C to 120* °*C*" means that the two corner values and each value within that range are individually disclosed.

As stated above, the present invention relates in one embodiment to a multi-component resin system material. *"Multi-component'* systems in the sense of the present invention contain several components stored separately from each other, so that curing of the ingredients contained in the components occurs only after all the components have been mixed together. In particular, the multi-component resin system material according to the invention contains at least one isocyanate component (A) comprising at least one hardenable isocyanate resin, and at least one further amine component (B) comprising a hardening agent for the isocyanate resin of isocyanate component (A). In a preferred embodiment, the multi-component resin system according to the invention is a two-component resin system. Thus, in one embodiment, the present invention relates to a multi-component resin system as defined above in the form of a two-component resin system consisting of components (A) and (B).

Preferably, the multi-component resin system of the present invention is free of any polyaspartic acid ester. It is also essential that the multicomponent resin system, and in particular the amine component of the multi-component resin system, is free from polyaspartic esters. The term *"free* of *polyaspartic acid esters"* as used in the present application means that the proportion of polyaspartic acid esters in the multi-component resin system is preferably less than 2 wt.-%, more preferably less than 0.5 wt.-% and even more preferably less than 0.1 wt.-%, in each case based on the total weight of the multi-component resin system. The presence of polyaspartic acid esters in the above weight percentage ranges can be attributed to potential impurities. Particularly preferably, however, the percentage of polyaspartic acid esters in the multi-component resin system is 0.0 wt.-% based on the total weight of the multi-component resin system.

In another preferred embodiment of the present invention, the total filling ratio of a mortar mass prepared by mixing the isocyanate component (A) and the amine component (B) is in a range of 25 to 85%, preferably 35 to 75%, most preferably 45 to 65%, based on the total weight of the multi-component resin system.

### Isocyanate component (A)

The multi-component resin system according to the invention comprises at least one isocyanate component (A) and at least one amine component (B). Before use, the isocyanate component (A) and the amine component (B) are provided separately from one another in a reaction-inhibiting manner.

The isocyanate component comprises at least one polyisocyanate. All aliphatic and/or aromatic isocyanates known to a person skilled in the art and having an average NCO functionality of 2 or more, individually or in any mixtures with one another, can be used as the polyisocyanate. The average NCO functionality indicates how many NCO groups are present in the polyisocyanate. Polyisocyanate means that two or more NCO groups are contained in the compound.

Suitable aromatic polyisocyanates are those having aromatically bound isocyanate groups, such as diisocyanatobenzenes, toluene diisocyanates, diphenyl diisocyanates, diphenylmethane diisocyanates, diisocyanatonaphathalenes, triphenylmethane triisocyanates, but also those having isocyanate groups that are bound to an aromatic group via an alkylene group, such as a methylene group, such as bis- and tris (isocyanatoalkyl) benzenes, toluenes and xylenes.

Preferred examples of aromatic polyisocyanates are: 1,3-phenylene diisocyanate, 1,4 phenylene diisocyanate, 2,4-toluylene diisocyanate, 2,5-toluylene diisocyanate, 2,6-toluylene diisocyanate, 1,3-xylylene diisocyanate, 1,4-xylylene diisocyanate, tetramethyl-1,3-xylylene diisocyanate, tetramethyl-1,4-xylylene diisocyanate, 1,3 bis(isocyanatomethyl)benzene, 1,4-bis(isocyanatomethyl)benzene, ethylphenyl diisocyanate, 2-dodecyl-1,3-phenylene diisocyanate, 2,4,6-triisopropyl-m-phenylene diisocyanate, 2,4,6-trimethyl-1,3-phenylene diisocyanate, 1,5 naphthylene diisocyanate, 3,3'-dimethyl-4,4'-biphenyl diisocyanate, 3,3'-dimethoxy-4,4' biphenyl diisocyanate, diphenylene methane 2,4'-diisocyanate, diphenylene methane-2,2'-diisocyanate, diphenylene methane-4,4' diisocyanate, triphenylmethane-4,4',4"-triisocyanate, 5-(p-isocyanatobenzyl)-2-methyl m-phenylene diisocyanate, 4,4-diisocyanato-3,3,5,5-tetraethyldiphenylmethane, 5,5' ureylene di-o-tolyl diisocyanate, 4-[(5-isocyanato-2-methylphenyl)methyl]-m-phenylene diisocyanate, 4-[(3-isocyanato-4-methylphenyl)methyl]-m-phenylene diisocyanate, 2,2' methylene-bis[6-(o-isocyanatobenzyl)phenyl] diisocyanate.

Aliphatic isocyanates which have a carbon backbone (without the NCO groups contained) of 3 to 30 carbon atoms, preferably 4 to 20 carbon atoms, are preferably used. Examples of aliphatic polyisocyanates are bis(isocyanatoalkyl) ethers or alkane diisocyanates such as methane diisocyanate, propane diisocyanates, butane diisocyanates, pentane diisocyanates, hexane diisocyanates (e.g. hexamethylene diisocyanate, HDI), heptane diisocyanates (e.g. 2,2-dimethylpentane-1,5-diisocyanate), octane diisocyanates, nonane diisocyanates (e.g. trimethyl HDI (TMDI), usually as a mixture of the 2,4,4- and 2,2,4-isomers), 2-methylpentane-1,5-diisocyanate (MPDI), nonane triisocyanates (e.g. 4-isocyanatomethyl-1,8-octane diisocyanate, 5 methylnonane diisocyanate), decane diisocyanates, decane triisocyanates, undecane diisocyanates, undecane triisocyanates, dodecane diisocyanates, dodecane triisocyanates, 1,3- and 1,4-bis-(isocyanatomethyl)cyclohexane (H6XDI), 3 isocyanatomethyl-3,5,5-trimethylcyclohexylisocyanate(isophoronediisocyanate,IPDI), bis-(4-isocyanatocyclohexyl)methane (H12MDI), bis-(isocyanatomethyl)norbornane (NBDI), 3(4)-isocyanatomethyl-1-methyl-cyclohexyl isocyanate (IMCI), octahydro-4,7 methano-1H-indenedimethyl diisocyanate, norbornene diisocyanate, 5-isocyanato-1-(isocyanatomethyl)-1,3,3-trimethylcyclohexane, ureylene-bis(p-phenylenemethylene-p phenylene)diisocyanate.

Particularly preferred isocyanates are hexamethylene diisocyanate (HDI), trimethyl HDI (TMDI), pentane diisocyanate (PDI), 2-methylpentane-1,5-diisocyanate (MPDI), 3-isocyanatomethyl-3,5,5-trimethylcyclohexylisocyanate (isophorone diisocyanate; IPDI), 1,3- and 1,4-bis-(isocyanatomethyl)cyclohexane (HeXDI), bis-(isocyanatomethyl)-norbornane (NBDI), 3(4)-isocyanatomethyl-1-methyl cyclohexyl isocyanate (IMCI) and/or 4,4'-bis(isocyanatocyclohexyl)methane (H12MDI) or mixtures of these isocyanates.

Even more preferably, the polyisocyanates are present as prepolymers (preferably homopolymers), biurets (preferably diisoxyanate-biuret-additionproducts), isocyanurates, iminooxadiazinediones, uretdiones and/or allophanates, which can be produced by oligomerizing difunctional isocyanates as described above or by reacting the isocyanate compounds as described above with polyols or polyamines, individually or as a mixture, and which have an average NCO functionality of 2 or more. Preferably, the average NCO functionality is in the range of from 2.5 to 5.5., more preferably 2.7 to 4.0, and most preferably 2.9 to 3.6.

Examples of suitable, commercially available isocyanates are Desmodur^{®} N 3900, Desmodur^{®} N 100, Desmodur^{®} N 3200, Desmodur^{®} N 3300, Desmodur^{®} ultra N 3600, Desmodur^{®} N 3700, Desmodur^{®} N 3800, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 3370, Desmodur^{®} XP 2599, Desmodur^{®} XP 2617, Desmodur^{®} XP 2406, Desmodur^{®} XP 2551, Desmodur^{®} XP 2838, Desmodur^{®} XP 2840, Desmodur^{®} N3500, Desmodur^{®} NZ 300, Desmodur^{®} E 30600, Bayhydur XP 2547, Bayhydur XP 2451/1, Bayhydur Ultra 307 Desmodur^{®} VL, Desmodur^{®} VL 50, Desmodur^{®} VL 51, Desmodur^{®} ultra N 3300, Desmodur^{®} eco N 7300, Desmodur^{®} E23, Desmodur^{®} E XP 2727, Desmodur^{®} E 2863 XP, Desmodur^{®} H, Desmodur^{®} VKS 20 F, Desmodur^{®} 44V20I, Desmodur^{®} 44P01, Desmodur^{®} 44V70 L (jeweils erhältlich von Covestro AG), Tolonate HDB, Tolonate HDB-LV, Tolonate HDT, Tolonate HDT-LV LM, Tolonate HDT-LV2, Tolonate XF 450, Tolonate X FLO 100, Tolonate X F 800 (jeweils erhältlich von Vencorex), Basonat HB 100, Basonat HI 100, Basonat HI 100 NG, Basonat HI 2000 NG (jeweils erhältlich von BASF), Takenate 500, Takenate 600, Stabio D-376N (jeweils erhältlich von Mitsui), Duranate 24A-100, Duranate TPA-100, Duranate THA-100 (jeweils erhältlich von Asahi Kasai), Coronate HXR, Coronate HXLV, Coronate HX, Coronate HK (all available from Tosoh).

One or more polyisocyanates are contained in the isocyanate component preferably in a proportion of from 20 to 100 wt.-%, more preferably in a proportion of from 30 to 90 wt.-% and even more preferably in a proportion of from 35 to 65 wt.-%, based on the total weight of the isocyanate component.

Preferably, the degree of filling of the isocyanate component (A) is 20 to 80 wt.-%, more preferably 60 to 70 wt.-%, in each case based on the total weight of the isocyanate component (A) and the amine component (B), respectively.

Preferably, the isocyanate component (A) comprises water in an amount of less than 0.5 wt.-%, more preferably less than 0.1 wt.-%, even more preferably less than 0.01 wt.-%, and most preferably no water.

### Amine component (B)

The amine component (B), which is provided separately from the isocyanate component (A) in the multi-component resin system in a reaction-inhibiting manner, comprises at least one amine which is reactive to isocyanate groups and has an average NH functionality of 2 or more.

According to a preferred embodiment, the amine which is reactive to isocyanate groups is selected from the group consisting of aliphatic, alicyclic, araliphatic and aromatic amines, particularly preferably from the group consisting of alicyclic and aromatic amines.

Examples of suitable amines which are reactive to isocyanate groups are given below, but without restricting the scope of the invention. These can be used either individually or in any mixtures with one another. Examples are: 1,2 diaminoethane(ethylenediamine), 1,2-propanediamine, 1,3-propanediamine, 1,4-diaminobutane, 2,2-dimethyl-1,3-propanediamine (neopentanediamine), diethylaminopropylamine (DEAPA), 2-methyl-1,5-diaminopentane, 1,3-diaminopentane, 2,2,4- or 2,4,4-trimethyl-1,6-diaminohexane and mixtures thereof (TMD), 1,3-bis(aminomethyl)-cyclohexane, 1,2-bis(aminomethyl)cyclohexane, hexamethylenediamine (HMD), 1,2- and 1,4-diaminocyclohexane (1,2-DACH and 1,4-DACH), bis(4-amino-3-methylcyclohexyl)methane, diethylenetriamine (DETA), 4-azaheptane-1,7-diamine, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7,10-trioxatridecane, 4-aminomethyl-1,8-diaminooctane, 2-butyl-2-ethyl-1,5-diaminopentane, N,N-bis(3-aminopropyl)methylamine, triethylenetetramine (TETA), tetraethylenepentamine (TEPA), pentaethylenehexamine (PEHA), 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornane diamine), dimethyldipropylenetriamine, dimethylaminopropyl-aminopropylamine(DMAPAPA), 2,4-diamino-3,5-dimethylthiotoluene (dimethylthiotoluene diamine DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure^{®} 300), 3-aminomethyl-3,5,5-trimethylcyclohexy amine (isophorone diamine (IPDA)), diaminodicyclohexylmethane (PACM), diethylmethylbenzenediamine (DETDA), 3,3'-diaminodiphenylsulfone (33 dapsone), 4,4'-diaminodiphenylsulfone (44 dapsone), mixed polycyclic amines (MPCA) (e.g. Ancamine 2168), dimethyldiaminodicyclohexylmethane (Laromin C260), 2,2-bis(4-aminocyclohexyl)propane, (3(4),8(9)bis(aminomethyldicyclo[5.2.1.02, 6]decane (mixture of isomers, tricyclic primary amines; TCD diamine), methylcyclohexyl diamine (MCDA), N,N'-diaminopropyl-2 methyl-cyclohexane-1,3-diamine, N,N'-diaminopropyl-4-methylcyclohexane-1,3 diamine, N-(3-aminopropyl)cyclohexylamine, and 2-(2,2,6,6-tetramethylpiperidin-4 yl)propane-1,3-diamine, 2-methylpentandiamine (e.g. DYTEK^{®} A), N-ethylaminopiperazine (N-EAP), N-aminoethyl-piperazine (N-AEP), 2,4,6-trimethyl-m-phenylendiamine, 2,4,6-tri(propan-2-yl)benzol-1,3-diamine, 4-ethyl-2,6-di(propan-2-yl)benzol-1,3-diamine, 4-methyl-2,6-di(propan-2-yl)benzol-1,3-diamine, 2,5-bis(methylsulfonyl)-1,4-benzoldiamine, chlorodiethylmethylbenzoldiamine (e.g. 5-chloro-4,6-diethyl-2-methyl-1,3-benzolediamine, 5-chloro-4,6-diethyl-6-methyl-1,3-benzole-diamine), 4-fluoro-5-(1-methylethyl)-1,2-benzoldiamine, 4,4'-methylen-bis[N-(1-methylpropyl)phenylamine], 4,4'-methylenbis(2,6-diethylaniline) (MBDA), 4,4'-methylenbis(N-sec-butylcyclohexanamine) (e.g. Clearlink^{®} 1000), 4,4'-methylen-bis[N-(1-methylpropyl)-3,3'-dimethylcyclohexaneamine] (e.g. Clearlink^{®} 3000), 4,4'-methylen-bis(3-chloro-2,6-diethylaniline) (MBCDA), the reaction product of 2-propenenitrile with 3-amino-1,5,5-trimethylcyclohexanmethanamine (e.g. Jefflink^{®} 745), 3-((3-(((2-cyanoethyl)amino)methyl)-3,5,5-trimethylcyclohexyl)amino)propiononitrile (e.g. Jefflink^{®} 136 or Baxxodur^{®} PC136), N,N'-di-sec-butyl-p-phenylendiamine, 2,4,6-trimethyl-m-phenylendiamine and 2,4,6-trimethyl-5-nitro-1,3-benzoldiamine as well as mixtures of two or more of these amines.

Particularly preferred amines are diethylmethylbenzenediamine (DETDA, such as Ethacure^{®} 100 Plus), 2,4-diamino 3,5-dimethylthiotoluene (dimethylthio-toluenediamine, DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure^{®} 300), 4,4'-methylene-bis[N (1-methylpropyl)phenylamine] (such as Unilink^{®} 4200), 4,4'-methylenebis(2,6-diethylaniline) (MBDA), 4,4'-methylenebis(N-sec-butylcyclohexanamine) (Clearlink@ 1000), 3,3'-diaminodiphenylsulfone (33 dapsone), 4,4'-diaminodiphenylsulfone (44 dapsone), N,N'-di-sec-butyl-p phenylenediamine (such as Unilink^{®} 4100), and 2,4,6-trimethyl-m-phenylenediamine, 4,4'-methylenebis(N-(1 methylpropyl)-3,3'-dimethylcyclohexanamine (Clearlink@ 3000), the reaction product of 2-propenenitrile with 3-amino-1,5,5-trimethylcyclohexanemethanamine (Jefflink@ 745), 3-((3-(((2-cyanoethyl)-amino)methyl)-3,5,5-trimethylcyclohexyl)amino)propiononitrile (Jefflink@ 136 or Baxxodur@ PC136), a mixture of DETDA and IPDA (e.g. Ethacure^{®} 270), a mixture of 4,4'-methylenebis(N-sec-butylaniline), 4,4'-methylenebis(2,6-diethylaniline) and diethylmethylbenzoldiamine (e.g. Ethacure^{®} 520), 4,4'-methylene-bis(3-chloro-2,6-diethylaniline) (MBCDA), chlorodiethylmethylbenzoldiamine (e.g. 5-chloro-4,6-diethyl-2-methyl-1,3-benzoldiamine, 5-chloro-4,6-diethyl-6-methyl-1,3-benzoldiamine), Aradur^{®} 223, Aradur^{®} 33225, Ancamide^{®} 506, Ancamine^{®} 2167, Ancamide^{®} 2426, Ancamide^{®} 3011, Ancamide^{®} 3419, Amicure^{®} IC-322, Epilox^{®}-Hardener H 14-50, Epilox^{®}-Hardener H15-60, Epilox^{®}-Hardener M1148, EPIKURE Curing Agent 3050, EPIKURE Curing Agent F205, Ethacure^{®} 300, Ethacure^{®} 100 Plus.

Most particularly preferred amines are 4,4'-methylene-bis[N-(1 methylpropyl)phenylamine], an isomer mixture of 6-methyl-2,4 bis(methylthio)-phenylene-1,3-diamine and 2-methyl-4,6-bis(methylthio)phenylene-1,3 diamine (Ethacure@ 300), diethyltoluoldiamine (DETDA, e.g. Ethacure^{®} 100 Plus), 4,4'-methylene-bis[N-(1-methylpropyl)-phenylamine] (e.g. Unilink^{®} 4200), 4,4'-methylene-bis(3-chloro-2,6-diethylaniline) (MBCDA), chlorodiethylmethylbenzolediamine, Aradur^{®} 33225, Ancamide^{®} 3419, Epilox^{®}-Hardener H 14-50.. Most preferred are DMTDA; DETDA, and mixtures therefrom.

One or more amines are contained in the amine component preferably in a proportion of from 20 to 100 wt.-%, more preferably in a proportion of from 30 to 70 wt.-% and even more preferably in a proportion of from 35 to 70 wt.-%, based on the total weight of the amine component.

Preferably, the degree of filling of the amine component (B) is 10 to 70 wt.-%, more preferably 40 to 50 wt.-%, in each case based on the total weight of the isocyanate component (A) and the amine component (B), respectively.

The quantity ratios of the polyisocyanate and the amine of the multi-component resin system are preferably selected such that the ratio of the average NCO functionality of the polyisocyanate to the average NH functionality of the amine is between 0.3 and 2.0, preferably between 0.5 and 1.8, more preferably between 0.5 and 1.5, even more preferably between 0.7 and 1.5 and most preferably 0.7 to 1.3.

A mixture of different polyisocyanates and/or different amines can be used to adjust the rate of curing. In this case, their quantity ratios are selected such that the ratio of the averaged NCO functionality of the isocyanate mixture to the averaged NH functionality of the amine mixture is between 0.3 and 2.0, preferably between 0.5 and 1.8, more preferably between 0.5 and 1.5, even more preferably between 0.7 and 1.5 and most preferably between 0.7 and 1.3.

Preferably, the amine component (B) comprises water in an amount of less than 0.5 wt.-%, more preferably less than 0.1 wt.-%, even more preferably less than 0.01 wt.-%, and most preferably no water.

### Conventional Filler (F)

The multi-component resin system material according to the present invention preferably comprises at least one conventional filler (F).

Inorganic fillers, in particular cements such as Portland cement or aluminate cement and other hydraulically setting inorganic substances, quartz, glass, corundum, porcelain, earthenware, barite, light spar, gypsum, talc and/or chalk and mixtures thereof are preferably used as conventional filler (F). The inorganic fillers can be added in the form of sands, powders, or molded bodies, preferably in the form of fibers or balls. A suitable selection of the fillers with regard to type and particle size distribution/(fiber) length can be used to control properties relevant to the application, such as rheological behavior, press-out forces, internal strength, tensile strength, pull-out forces and impact strength. Particularly suitable fillers are quartz powders, fine quartz powders and ultra-fine quartz powders that have not been surface-treated, such as Millisil@ W3, Millisil@ W6, Millisil@ W8 and Millisil@ W12, preferably Millisil@ W12. Silanized quartz powders, fine quartz powders and ultra-fine quartz powders can also be used. These are commercially available, for example, from the Silbond@ product series from Quarzwerke. The product series Silbond@ EST (modified with epoxysilane) and Silbond@ AST (treated with aminosilane) are particularly preferred. Furthermore, it is possible to use conventional filler (F) based on aluminum oxide such as aluminum oxide ultra-fine fillers of the ASFP type from Denka, Japan (d50 = 0.3 pm) or grades such as DAW or DAM with the type designations 45 (d50 < 0.44 pm), 07 (d50 > 8.4 pm), 05 (d50 < 5.5 pm) and 03 (d50 < 4.1 pm). Moreover, the surface treated fine and ultra-fine fillers of the Aktisil AM type (treated with aminosilane, d50 = 2.2 pm) and Aktisil EM (treated with epoxysilane, d50 = 2.2 pm) from Hoffman Mineral can be used. The fillers can be used individually or in any mixture with one another.

The filler may be comprised in isocyanate component (A) and/or amine component (B), and preferably is comprised in both isocyanate component (A) and amine component (B).

The conventional filler (F) may optionally be modified. For example, the filler may be modified, i.e., surface modified, with an adhesion promoter as described below.

The particle size of the conventional filler (F) is not especially important according to the present invention. For example, the conventional filler (F) may have a median particle size d50 of 100 µm or less, or 50 µm or less, such as 20 µm or less.

### Superabsorber (C)

As outlined above, the multi-component resin system according to the present invention further comprises a superabsorber (C). Preferably, the multi-component resin system of the present invention comprises the superabsorber (C) in addition to a conventional filler (F). Preferably, the amount of superabsorber (C) or the combined amount of superabsorber (C) and conventional filler (F) in the multi-component resin system is 30 to 60 wt.-%, based on the total weight of the multi-component resin system, preferably 35 to 60 wt.-%, more preferably 45 to 58 wt.-%, even more preferably 50 to 56 wt.-%.

Also preferably, the superabsorber (C) is present in the multi-component resin system in in an amount in the range of from 0.1 to 10.0 wt.-%, more preferably from 0.2 to 3.0 wt.-%, even more preferably from 0.3 to 2.0 wt.-%, and most preferably from 0.4 to 1.0 wt.-%, based on the total weight of the multi-component resin system. If the amount of superabsorber is lower than the indicated ranges, the effect might be less prominent. Moreover, if the amount of superabsorber (C) is higher than the indicated ranges, the bond strength values (R1) are expected to decrease.

Preferably, the superabsorber (C) is present in the multi-component resin system in addition to a conventional filler (F). It has been found that it is not necessary to provide the superabsorber (C) in such high amounts as a conventional filler (F) usually is used. Hence preferably, the weight ratio of the superabsorber (C) to the conventional filler (F) in the multi-component resin system according to the present invention is at least 0.001, preferably in the range of 0.001 to 0.1, more preferably in the range of from 0.005 to 0.08, even more preferably in the range of 0.008 to 0.05, and most preferably in the range of 0.01 to 0.03.

The superabsorber (C) can be introduced by being present in the isocyanate component (A) and/or in the amine component (B). Preferably, the superabsorber (C) is introduced by being present in isocyanate component (A). Hence, the isocyanate component (A) preferably comprises the superabsorber (C) in an amount of at least 1 wt.-%, more preferably at least 2 wt.-%, and most preferably of at least 3 wt.-%. Usually, the isocyanate component (A) preferably comprises the superabsorber (C) in an amount of not more than 10 wt.-%.

The superabsorber (C) is preferably a superabsorbent polymer (SAP). The absorbing behavior of SAPs is essentially linked to two conditions and is also largely determined by these. Firstly, SAPs must have a sufficient number of polar groups, which determine the hydrophilicity. An insufficient number of polar groups would mean insufficient hydrophilicity and thus insufficient water absorption. Secondly, the polymers must be weakly crosslinked, i.e., the polymer chains must be linked together by covalent bonds. If they were not crosslinked, they would dissolve in water. If they were highly crosslinked, the network would not be able to stretch due to its tight mesh and would therefore absorb only very little water. It follows that the water absorption and swelling capacity of a SAP increases when the number of polar groups in the network chains increases and the degree of crosslinking decreases or, conversely, with increasing crosslinking density and decreasing number of polar groups in the network chains, the water absorption and swelling capacity of a SAP decreases. To characterize the properties of a SAP, generally the concentration of polar groups or the crosslink density is not specified, but instead the properties resulting from the two parameters, such as water absorption capacity and degree of swelling, are provided. Preferably, the polar groups are ionic groups and/or hydrophilic groups. More preferably, the hydrophilic groups are hydroxy groups.

Without wishing to be bound by theory, it is believed that the effect of the present invention is linked to the interaction between the borehole surface and the polar groups of SAP or to their shrinkage compensating effect by swelling.

Apart from the presence of polar groups and the crosslinking degree, the remaining structural features of the crosslinking chains is of secondary importance for the function as SAPs. Hence, SAPs preferably are selected from different natural and synthetic polymers. More preferably from the list consisting of amylopectin, gelatine, polyvinylpyrrolidone, and polyacrylic acid. However, weakly crosslinked and partially neutralized polyacrylic acid polymers and polyacrylic acid copolymers are particularly preferred, as they are easily technical available and as their crosslinking degree and the presence of polar groups can be easily adjusted. Such polyacrylic polymers and/or copolymers are commercially available, for example, from BASF SE, Ludwigshafen (Luquasorb) or Evonik Stockhausen GmbH, Krefeld (Creasorb, Creabloc).

Hence, preferably, the superabsorber is a polymer material obtainable by a process comprising the step of polymerizing at least one ethylenically unsaturated monomer comprising a polar group in the presence of at least one cross-linker. More preferably, the ethylenically unsaturated monomer is selected from the list consisting of α,β-unsaturated carboxylic acids, preferably acrylic acid, and salts thereof, preferably sodium, potassium, and ammonium salts thereof, and mixtures thereof. Also more preferably, the cross-linker is selected from the list consisting of di- or polyfunctional monomers, preferably N,N'-methylenebisacrylamide, trimethylolpropane triacrylate, ethylene glycol di(methacrylate) or triallylamine.

Preferably, the superabsorber (C) comprises water in an amount of less than 0.5 wt.-%, more preferably less than 0.1 wt.-%, even more preferably less than 0.01 wt.-%, and most preferably no water. Usually, the superabsorber (C) is present in the form of particles. The size of the superabsorber (C) particles is decisive for the speed of water absorption. Via the particle size, water uptake and swelling can be selectively controlled in such a way that it is largely completed preferably before or during the curing reaction, less preferably only after curing. Preferably particle sizes of the superabsorber (C) are in the range of from 1 to 3000 µm, more preferably from 2 to 1000 µm, and most preferably from 10 to 600 µm.

The preferred particle sizes have the additional advantage of allowing a sufficiently homogeneous distribution in the surrounding matrix, thus avoiding strong local concentration differences, especially also at interfaces. The possible interaction with boundary surfaces and a water uptake, be it from an interface such as a wet wellbore surface, or from another component, is thus favored. The smaller the superabsorber (C) particles are, the faster the water uptake is. Thus, via the particle size, the kinetics of swelling of the superabsorber (C) can be advantageously matched to the kinetics of the curing reaction of the multi-component resin system.

The swelling capacity of a superabsorber (C) describes the ability to absorb water under swelling. As described above, the swelling capacity depends on the degree of crosslinking and the concentration of polar groups. The swelling capacity at 23 °C can be measured by adding distilled water in excess to a defined amount of superabsorber (C) *m_{SAP},* decanting excess water, i.e., water not bound by the superabsorber, after swelling has occurred over 24 h, and determining the mass *m_{q}* of the swollen hydrogel. The swelling capacity is then calculated from the quotient *m_{q}*/*m_{SAP}* [g/g].

Preferably, the swelling capacity of the superabsorber (C) in demineralized water is higher than 10 g/g, more preferably higher than 20 g/g, even more preferably higher than 50 g/g, and most preferably higher than 100 g/g. Ions dissolved in water strongly reduce the swelling capacity of superabsorber (C). Swelling in demineralized water represents an idealized condition that hardly ever occurs in reality. Usually, the presence of dissolved ions must always be expected. ions can consist of water-soluble constituents. These can come from water-soluble constituents in the drill dust or from various other raw materials in the used components (e.g., from the fillers, ionic tensides, partially demineralized water). Therefore, the swelling in 0.9% saline solution is used as a further practice-relevant parameter. Hence, preferably, the swelling capacity of the superabsorber (C) in 0.9% saline is higher than 1 g/g, more preferably higher than 5 g/g, and most preferably higher than 10 g/g.

Without wishing to be bound by theory, it is believed that by adding the superabsorber (C) a sufficient swelling effect and volume increase in the mortar comprising the multi-component resin system of the present invention is achieved upon contact with water or aqueous solutions. By expanding said mortar into small cracks and undercuts, a better and more intensive contact with the borehole surface and an improved form fit and thus an increased performance could be achieved.

### Rheology additive

The flow properties are adjusted by adding rheology additives which, according to the invention, are used in the isocyanate component (A) and/or the amine component (B). Suitable rheology additives are: phyllosilicates such as laponites, bentones or montmorillonite, Neuburg siliceous earth, fumed silicas, polysaccharides; polyacrylate, polyurethane or polyurea thickeners and cellulose esters. Wetting agents and dispersants, surface additives, defoamers & deaerators, wax additives, adhesion promoters, viscosity reducers or process additives can also be added for optimization.

The proportion of one or more rheology additives in the isocyanate component is preferably from 0.1 to 3 wt.-%, more preferably from 0.1 to 1.5 wt.-%, based on the total weight of the isocyanate component. The proportion of one or more rheology additives in the amine component is preferably from 0.1 to 5 wt.-%, more preferably from 0.5 to 3 wt.-%, based on the total weight of the amine component.

In one embodiment of the multi-component resin system, the isocyanate component (A) and/or the amine component (B) contains at least one silane as an adhesion promoter.

By using a silane, the cross-linking of the borehole wall with the mortar composition is improved such that the adhesion increases in the cured state.

Suitable adhesion promoters are selected from the group of silanes that have at least one Si-bound hydrolysable group. It is not necessary for the silane to comprise a further functional group in addition to the Si-bound hydrolysable group, such as an isocyanate group or an amino group. Nevertheless, in addition to the Si-bound hydrolysable group, the silane may comprise one or more identical or different further functional groups, such as an amino, mercapto, epoxy, isocyanato, alkenyl, (meth) acryloyl, anhydrido or vinyl group. The Si-bound hydrolysable group is preferably a CC alkoxy group and very particularly preferably a methoxy or ethoxy group.

Suitable silanes are selected from the group consisting of 3-aminopropyltrialkoxysilanes such as 3-aminopropyltrimethoxysilane and 3-aminopropyltriethoxysilane; 3-glycidyloxypropyltrialkoxysilanes such as 3-glycidyloxypropyltrimethoxysilane and 3-glycidyloxypropyltriethoxysilane; glycidyloxymethyltrimethoxysilane; 3-glycidyloxy-propylmethyldimethoxysilane; bis-(3-trialkoxysilylpropyl) amines such as bis (3-trimethoxysilylpropyl) amine and bis-(3-triethoxysilylpropyl) amine; 3-mercaptopropyltrialkoxysilanes such as 3-mercaptopropyltrimethoxysilane and 3-mercaptopropylmethyldimethoxysilane; 3-(meth)acryloyloxyalkyltrialkoxysilanes such as 3-(meth)acryloyloxypropyltrimethoxysilane, 3-(meth)acryloyloxypropyltriethoxysilane; 3-(meth)acryloyloxymethyltrimethoxysilane, 3-(meth)acryloyloxymethyltriethoxysilane and 3-(meth)acryloyloxypropylmethyldimethoxysilane; alkenylalkoxysilanes such as vinylalkoxysilanes, e.g. vinyltrimethoxysilane and vinyltriethoxysilane; tetraalkoxysilanes such as tetraethoxysilane, tetramethoxysilane and tetrapropoxysilane; 2-(3,4 epoxycyclohexyl)ethyltrimethoxysilane, N-2-(aminoethyl)-3-aminopropylmethyl diethoxysilane, N-2-(aminoethyl)-3-aminopropyl-triethoxysilane, N-phenyl-3-aminoethyl 3-aminopropyl trimethoxysilane and mixtures of two or more thereof.

Particularly suitable silanes are selected from the group consisting of 3-aminopropyltrialkoxysilanes, 3-glycidyloxyalkyltrialkoxysilanes, bis (3-trialkoxysilyl-propyl) amines, 3-mercaptopropyltrialkoxysilanes, 3-(meth)acryloyloxy-alkyltrialkoxysilanes, alkenylalkoxysilanes, tetraalkoxysilanes and mixtures of two or more thereof.

Most particularly suitable silanes are 3-glycidoxypropyldimethoxysilane, 3-glycidoxypropyltrimethoxysilane, 3-trimethoxysilylpropyl methacrylate and vinyltrimethoxysilane.

The silane can be contained in the multi-component resin system in an amount of up to 10 wt.-%, preferably from 0.1 to 5 wt.-%, more preferably from 1.0 to 2.5 wt.-%, based on the total weight of the multi-component resin system. The silane can be contained entirely in one component, i.e., the isocyanate component (A) or the amine component (B), or be split between the two components, i.e., split between the isocyanate component (A) and the amine component (B).

### Mortar Composition

The invention also relates to a mortar composition which is produced by mixing the isocyanate component (A) and the amine component (B) of the multi-component resin system.

### Use of the multi-component resin system

The multi-component resin system is preferably present in cartridges or film pouches which are characterized in that they comprise two or more separate chambers in which the isocyanate component (A) and the amine component (B) are separately arranged in a reaction-inhibiting manner.

For the use as intended of the multi-component resin system, the isocyanate component (A) and the amine component (B) are discharged out of the separate chambers and mixed in a suitable device, for example a static mixer or dissolver. The mixture of isocyanate component (A) and amine component (B) (mortar composition) is then introduced into the optionally previously cleaned borehole by means of a known injection device. The fastening element to be fastened is then inserted into the mortar composition and aligned. The reactive constituents of the isocyanate component react with the amino groups of the amine component (B) by polyaddition such that the mortar composition cures under environmental conditions within a desired period of time, preferably within a few minutes or hours.

Hence, the present invention relates to the use of a mortar composition or a multi-component resin system according to the present invention for chemically fixing anchoring means in drilled holes or for structural bonding. In particular, the present invention is directed towards the use of mortar composition or a multi-component resin system according to the present invention for enhancing the bond strength of chemically fixed anchoring means in drilled holes, preferably for enhancing the bond strength of chemically fixed anchoring means in drilled holes under wet conditions.

Hence, the present invention also relates to the use of a superabsorber (C) as described above for enhancing the bond strength of anchoring means chemically fixed by the mortar composition or a multi-component resin system according to the present invention in drilled holes, preferably for enhancing the bond strength of chemically fixed anchoring means mortar composition or a multi-component resin system according to the present invention in drilled holes under wet conditions.

### Method of the present invention

Finally, the present invention relates to a method of chemically fixing structural elements in drilled holes, wherein a mortar composition or a multi-component resin system according to the present invention is used for chemical fixing.

### EXAMPLES

All chemicals and ingredients of the compositions listed herein below are commercially available and have been used at commercial grade unless otherwise noted.

### General Procedure for the Multi-component resin system

In a plastic bucket, the liquid components according to table 1 were mixed with a wood spatula. Then, the filler and thickener were added and by hand premixed before mixing it further into a dissolver (PC Laborsystem, volume 1L) during 8.5 min under 80 mbar reduced pressure at 3500 rpm.

All examples had a volume ratio of isocyanate component (A) to amine component (B) of 3:1 and an isocyanate:amine ratio of 1:26:1.

### Pull Out Test

To determine the bond strength in concrete, pull out experiments under the R1, B7 DD (meaning Diamond Drilled) and B8 HD (meaning Hammer Drilled)) conditions were made following the description given by the guideline ETAG 001 part 5 (Guideline For European Technical Approval Of Metal Anchors For Use In Concrete) superseded by EAD 330499-00-0601. In these experiments, threaded rods (size M12) were installed in 14 mm cleaned (2x compressed air 6 bar, 2x brushed and 2x compressed air 6 bar) hammered drilled boreholes made in concrete plates (C20/25) with 60 mm or 72 mm embedment depth (check details in tables).

### R1: Reference boreholes

In these experiments, threaded rods (size M12) were installed in 14 mm cleaned (2x compressed air 6 bar, 2x brushed and 2x compressed air 6 bar) hammered drilled boreholes made in dry concrete plates (C20/25) with 60 mm or 72 mm embedment depth (check details in tables). After 24 h curing time at R1, the bond strength was determined in R1 pull-out tests.

### B7: Robustness in water saturated concrete

In these experiments, threaded rods (size M12) were installed in 14 mm cleaned diamond drilled boreholes made in water saturated concrete plates (C20/25) with 60 mm or 72 mm embedment depth (check details in tables). Cleaning B7 DD: 1xflush/1xVAC/1xBrush/1x6bar (blow 1 sec each cm). Set within 10 min Cleaning.

### B8: Robustness in water filled holes in water saturated concrete

In these experiments, threaded rods (size M12) were installed in 14 mm cleaned hammered drilled and water filled boreholes made in water saturated concrete plates (C20/25) with 60 mm or 72 mm embedment depth (check details in tables). Cleaning B8 HD: 1xVAC/1xBrush/1x6bar (blow 1 sec each cm). Fill with water. Setting with piston plug between 30min to 2 hour.

For the B7 and B8 experiments, the pull out tests were performed after 48 h curing time.

**Table 1: Compositions of multi-component resin systems (Components A and B)**

| | | **V1** | **A1** |
|---|---|---|---|
| **Isocyanate component (A)** | | | |
| HDI homopolymer | wt.-% | 28 | 28 |
| HDI biuret oligomer | wt.-% | 4.5 | 4.5 |
| Glymo | wt.-% | 2.2 | 2.2 |
| silica | wt.-% | 1.2 | 1.2 |
| zeolite powder | wt.-% | 3 | 3 |
| quartz powder | wt.-% | 20 | 20 |
| quartz sand | wt.-% | 41.1 | 40.1 |
| superabsorber | | | |
| | | | |

| **Amine component (B)** | | | |
|---|---|---|---|
| Ethacure^{®} 300 | wt.-% | 48.6 | 48.6 |
| Ethacure^{®} 100 | wt.-% | 5 | 5 |
| quartz powder | wt.-% | 10 | 10 |
| quartz sand | wt.-% | 34.5 | 34.5 |
| silica | wt.-% | 1.9 | 1.9 |

**Table 2: Measurement results of the multi-component resin systems**

| | | **V1** | **A1** |
|---|---|---|---|
| filling degree | % | 54.6 | 54.6 |
| filling degree (A) | % | 65.3 | 65.3 |
| filling degree (B) | % | 45.4 | 45.4 |
| curing time (R1) | h | 24 | 24 |
| curing time (B7) | h | 24 | 24 |
| curing time (B8) | h | 48 | 48 |
| R1 | MPa | 31 | 32.2 |
| B7 | MPa | 23.9 | 30.2 |
| B8 | MPa | 18.9 | 22.7 |

**Table 3: Used Chemicals**

| **Abbreviation** | **Specification** | **Supplier** |
|---|---|---|
| HDI hompolymer | Low-viscous, aliphatic polyisocyanate-resin on the basis of hexamethylenediisocyanate (equivalent weight ca. 179; amount of NCO acc. to M105-ISO 11909 23,5±0,5 wt.-%, monomeric HDI acc. to M106-ISO 10283 < 0.25 wt.-%; viscosity (23 °C) acc. to M014-ISO 3219/A.3 730±100 mPas; Desmodur^{®} N 3900 | Covestro AG |
| HDI biuret oligomer | Desmodur^{®} N 3200 | Covestro AG |
| Ethacure^{®} 300 | Ethacure^{®} 300 Curative; dimethylthiotoluoldiamine 95-97 wt.-%, monomethylthiotoluoldiamine 2-3 wt.-% | Albermale Corporation |
| Ethacure^{®} 100 | Ethacure^{®} 100 Plus; diethyltoluoldiamine | Albermale Corporation |
| Glymo | Dynasylan^{®} GLYMO; 3-Glycidyloxypropyltrimethoxysilane | Evonik Resource Efficiency GmbH |
| quartz powder | Millisil^{®} W12 | Quarzwerke Frechen |
| quartz sand | P10 | Strobel |
| silica | Cab-O-Sil^{®} TS-720 | Cabot |
| superabsorber | Starvis S 3911 F | BASF SE |

Tables 1 and 2 show that generally adding superabsorbers to the multi-component resin system according to the present invention improves the bond strength of anchors in concrete under wet conditions.

## Claims

1. A multicomponent resin system comprising at least one isocyanate component (A) and at least one amine component (B),
wherein the isocyanate component (A) comprises at least one aliphatic and/or aromatic polyisocyanate having an average NCO functionality of 2 or higher, wherein the amine component (B) comprises at least one amine reactive to isocyanate groups having an average NH functionality of 2 or higher,
**characterized in that**
the isocyanate component (A) and/or the amine component (B) comprises at least one superabsorber (C).

2. The multicomponent resin system according to claim 1, **characterized in that** the superabsorber (C) is present in the multi-component resin system in in an amount in the range of from 0.1 to 10.0 wt.-%, preferably from 0.2 to 3.0 wt.-%, more preferably from 0.3 to 2.0 wt.-%, and most preferably from 0.4 to 1.0 wt.-%, based on the total weight of the multi-component resin system.

3. The multicomponent resin system according to claims 1 or 2, **characterized in that** the superabsorber (C) is a polymer material, which is able to absorb a polar solvent, preferably water, in a quantity of at least 50 times its own weight, preferably at least 100 times, more preferably at least 500 times, and even more preferably at least 1000 times, and most preferably more than 1000 times.

4. The multicomponent resin system according to claim 4, wherein the polymer material comprises at least one polar group, preferably an ionic group.

5. The multicomponent resin system according to claims 4 or 5, wherein the polymer material is cross-linked.

6. The multicomponent resin system according to any one of the preceding claims 4 to 6, **characterized in that** the polymer material is obtainable by a process comprising the step of polymerizing at least one ethylenically unsaturated monomer comprising a polar group in the presence of at least one cross-linker.

7. The multicomponent resin system according to claim 7, **characterized in that** the ethylenically unsaturated monomer is selected from the list consisting of α,β-unsaturated carboxylic acids, preferably acrylic acid, and salts thereof, preferably sodium, potassium, and ammonium salts thereof, and mixtures thereof.

8. The multicomponent resin system according to claims 7 or 8, **characterized in that** the cross-linker is selected from the list consisting of di- or polyfunctional monomers, preferably N,N'-methylenebisacrylamide, trimethylolpropane triacrylate, ethylene glycol di(methacrylate) or triallylamine.

9. The multicomponent resin system according to any one of the preceding claims, **characterized in that** both the isocyanate component (A) and/or the amine component (B) comprise at least one filler and at least one rheology additive.

10. The multicomponent resin system according to any one of the preceding claims, **characterized in that** the isocyanate component (A) and the amine component (B) are present in a quantity ratio in which the average NCO functionality to the average NH functionality is between 0.3 and 2.0.

11. The multicomponent resin system according to any one of the preceding claims, **characterized in that** the isocyanate component (A) and/or the amine component (B) contain at least one adhesion promoter.

12. Mortar mass prepared by mixing the isocyanate component (A) and the amine component (B) of the multicomponent resin system according to any of the preceding claims.

13. A method of chemically fixing structural elements in drilled holes, wherein a mortar composition according to claim 12 or a multi-component resin system according to any one of claims 1 to 11 is used for chemical fixing.

14. Use of a mortar composition according to claim 12 or a multi-component resin system according to any one of claims 1 to 11 for chemically fixing anchoring means in drilled holes or for structural bonding.

15. Use of a superabsorber (C) in a mortar composition according to claim 12 or a multi-component resin system according to any one of claims 1 to 11 to increase the bond stress of an anchoring means chemically fixed thereby.
